(19) Europäisches Patentamt / European Patent Office / Office européen des brevets

(11) **EP 4 531 437 A1**

(12) **EUROPEAN PATENT APPLICATION**

(43) Date of publication:
**02.04.2025 Bulletin 2025/14**

(21) Application number: **24202685.4**

(22) Date of filing: **25.09.2024**

(51) International Patent Classification (IPC):
***H04S 1/00*** *(2006.01)*

(52) Cooperative Patent Classification (CPC):
**H04S 1/005; G06N 3/045;** G06N 3/0455;
G06N 3/09; H04S 2420/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 GB 202314717**

(71) Applicant: **Sony Interactive Entertainment Europe Limited
London W1F 7LP (GB)**

(72) Inventors:
• **ARMSTRONG, Calum**
  **London, W1F 7LP (GB)**
• **COCKRAM, Philip**
  **London, W1F 7LP (GB)**
• **PILATAKI MANIKA, Maria**
  **London, W1F 7LP (GB)**

(74) Representative: **Gill Jennings & Every LLP
The Broadgate Tower
20 Primrose Street
London EC2A 2ES (GB)**

(54) **METHODS AND SYSTEMS FOR SYNTHESISING AN HRTF**

(57)     A computer-implemented method of training a deep learning model for use in synthesis of a head-related transfer function, HRTF, is disclosed. The method comprises: providing a training dataset comprising a plurality of timbre features, each timbre feature comprising an HRTF measurement of a subject at a particular measurement angle, where the HRTF measurement has been processed to remove localisation perception features of the HRTF; training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, such that the latent vector space is usable to synthesise a timbre component of an HRTF. The method allows for generating a personalised timbre component of an HRTF to provide better personalisation of an HRTF, thereby providing improved binaural audio.

Fig 2.

EP 4 531 437 A1

## Description

### FIELD OF THE INVENTION

The following disclosure relates to methods and systems for synthesising an HRFT, particularly for use in improved binaural audio for VR, AR and video gaming applications. More specifically, methods and system for synthesising a timbral component of an HRTF are described.

### BACKGROUND

Binaural audio is a crucial component of the rapidly developing immersive technologies, such as VR, AR and video gaming applications. Spatial audio, and specifically Head-Related Transfer Function (HRTF) personalisation, plays a vital role in a user's experience of virtual and augmented environments. It is necessary to precisely tune the audio experienced by the user to provide the necessary spatial audio effects to provide an immersive experience.

Head-Related Transfer Functions (HRTFs) are frequency and time-dependent signal processing filters that represent the stereo anechoic acoustic transfer function between a positional sound source and a listener's ears. HRTFs describe the way in which a person hears sound in 3D depending on the position of the sound source. HRTFs therefore provide the listener with spatial cues that help them to localize sounds in 3D space. These cues include time and level differences between ears (primarily associated with lateral localization) and peaks/notches within the frequency response of each ear (primarily associated with elevatory localization). By convolving an audio signal with an HRTF and presenting the result directly to a listener's ears (usually via headphones), a source may be simulated as if coming from the direction in which the HRTF was measured.

Given the importance of HRTFs in simulating immersive acoustic experiences in augmented reality (AR), virtual reality (VR), and gaming applications, there has been significant work focussing on synthesising personalised HRTFs for use in these applications. Multiple methods have been proposed for HRTF personalisation, including estimation given anthropometric features, simulation given the 3D geometry of a subject's ear or personalisation based on perceptual feedback. These personalised HRTFs may then be applied to an input audio signal to provide an approximation to the way a specific user experiences audio.

Despite progress, there are a number of issues with known methods for HRTF synthesis and personalisation. Thus far, progress has focussed on features of HRTFs associated with localisation, particularly on synthesising the spectral features such as the pinnae notches. However, focussing synthesis and personalisation purely on these known features of the HRTF, having the most significant influence on localisation, places a restriction on the level of personalisation achievable, and therefore limits the quality of the audio and experience of the user. Furthermore, storing a large number of HRTFs in order to select an appropriate HRTF matched to a user creates issues in terms of storage.

There is accordingly a need for new HRTF synthesis and personalisation methods that make progress in overcoming the above issues.

### SUMMARY OF INVENTION

According to a first aspect, the present disclosure provides a computer-implemented method of training a deep learning model for use in synthesis of a head-related transfer function, HRTF, the method comprising: providing a training dataset comprising a plurality of timbre features, each timbre feature comprising an HRTF measurement of a subject at a particular measurement angle, where the HRTF measurement has been processed to remove localisation perception features of the HRTF; training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, such that the latent vector space is usable to synthesise the timbre component of an HRTF.

The invention allows for the learning of a latent vector space, also referred to herein as a timbre vector space, that encodes the timbre information of any input processed HRTF, independently of localisation information. The timbre vector space and decoder can then be used as an HRTF timbre synthesiser to generate a timbre component to be added to any synthesised HRTF. This makes an important contribution over prior art methods which have solely focussed on synthesising the features of an HRTF associated with localisation perception. These prior art methods do not fully simulate the full perception of a sound source because they fail to include this subject dependent timbre information, that provides frequency dependent changes in perception of a sound source. Full synthesis of an HRTF to give a complete simulation of a perceived sound source requires the inclusion of this timbre component. Therefore, by applying a timbre component generated using the present invention to a synthesised HRTF a more accurate simulation of audio perception can be provided, improving the immersive experience of the user.

Since the learned timbre space captures the variation in this timbre component in a reduced vector space it allows for efficient storage of a vast range of possible HRTF timbre components that can then be applied to a synthesised HRTF. This is particularly beneficial for example, in the context of video games where computational efficiency in run time audio generation is particularly important given the significant competing resources on memory and processing.

The encoding of timbre in a reduced dimensional vector space also facilitates user tuning of the timbre component of a simulated HRTF. For example, a user can select a vector from the timbre vector space, or advantageously a further dimension reduced vector space, using user input device to select a timbre component that provides optimum results.

Importantly, the latent vector space learned using the present method encodes timbre information independent of localisation perception information. Therefore a timbre component generated using the present method can be applied to a synthesised HRTF without influencing the localisation effect of the HRTF, ensuring that perception localisation cues remain the same. This allows a selected timbre component to be applied to an input or base HRTF comprising localisation related features to provide a complete HRTF, where the timbre component may be tuned in real time without effecting localisation.

Preferably the method uses an adversarial training objective in which the autoencoder model is trained to learn a latent space that is predictive of the subject (or specific subject's ear) that the HRTF was measured from, while encouraging it to learn a latent space that is non predictive of measurement angle. In this way a latent space is learned that allows for reconstruction of a timbre feature of a subject, while discarding measurement angle information.

The HRTF's to be processed preferably comprise free-field compensated HRTFs.

In preferable examples, the timbre features are each labelled with a subject label indicating the subject from which the HRTF was measured and a measurement angle label indicating a measurement angle of the HRTF; wherein the autoencoder model comprises:

- an encoder for encoding an input timbre feature into a latent vector space and a decoder for decoding from the latent vector space to reconstruct the timbre feature;

- a subject classifier arranged to take a vector from the latent vector space as input and predict the subject label;

- a measurement angle classifier arranged to take a vector from the latent vector space as input and predict the measurement angle label;

the method further comprising: training the machine learning model using the training dataset such that the autoencoder is trained to reconstruct the timbre feature through the latent vector space, while minimising a classification error of the timbre classifier and maximising a classification error of the measurement angle classifier, thereby learning a latent vector space that encodes timbre information independently of the measurement angle.

The use of this model architecture and learning objective provides particularly accurate reconstruction of timbral features of existing HRTFs, as well as the possibility of synthesising novel HRTF timbre. It allows for improved disentangling of measurement angle and timbre information, allowing for independent timbre control when synthesising novel features.

Preferably the HRTF measured from each subject's ear is treated individually and is encoded in a separate timbre feature. The "subject label" therefore corresponds to the specific ear of the subject from which the original HRTF was measured in these examples. It is also referred to as the "timbre label" herein.

Preferably the decoder takes the measurement angle label as input so as to reconstruct the input timbre feature associated with a particular input measurement angle. More specifically, the latent vector space encodes timbral information such that the single vector can be used to reconstruct the timbral component along any measurement direction by feeding the appropriate angle to the decoder with the vector from the latent space encoding the timbre feature.

The measurement angle label and/or the subject label may be in a one-hot encoded format. The measurement angle label and/or the subject label may each comprise a vector or matrix with a number of elements corresponding to the total number of possible values of the measurement angle and the total number of subjects (or subject's ears) that the HRTF were measured at (i.e. the total number of classes).

In some examples, the timbre feature comprises a one dimensional vector encoding the magnitude changes of the timbre component at a single measurement angle. In particular the number of elements of the vector corresponding to the number of frequency values at which the timbre component is sampled. The measurement angle label in this case may provide a specific angle comprising an azimuth and elevation angle, for example it may be encoded as a 2-dimensional matrix providing all possible measurement angles.

In some examples, each timbre feature comprises a 2D matrix representing comprising the processed HRTF data at a specific azimuth angle and all elevation angles; wherein the measurement angle label comprises the azimuth angle and the measurement angle classifier is configured to predict the measurement angle label using a vector from the latent vector space as input, such that during training the model learns to encode timbre information in the latent vector space and discard azimuth information. In this way, all azimuthal information is discarded from the latent vector space but some elevation information may be retained. This provides a less-computationally intensive method compared to training based on timbre features at a single measurement angle, while still discarding the majority of the significant localisation information from the timbre space. In these examples, each timbre feature may be a [n x m] matrix, where n corresponds to the number of frequency bins and m the number of elevation angles. That is, in some examples, a single timbre feature is constructed as a 2D matrix that represents a subject's Timbre data at all elevations for a single azimuth.

Preferably, providing the training dataset comprises: providing a plurality of HRTFs, each measured from a particular subject at a particular measurement angle; processing the plurality of HRTFs to remove location-dependent features of the HRTFs, where the processing comprises removing spectral notches from the measured HRTFs. Spectral notches are the key features associated with localisation cues so removing them leaves the remaining timbral component of the HRTF. Removing spectral notches preferably comprises removing pinnae notches from the HRTF measurements.

Preferably the method further comprises removing interaural time delay, ITD from each HRTF. Preferably the method further comprises removing stereo cues from each HRTF. In this way, method only uses mono magnitude spectra. That is, preferably each HRTF comprises a mono magnitude spectra.

Removing spectral notches from the HRTF measurements preferably further comprises: identifying notch boundaries; removing samples within the notch boundaries; re-interpolating the HRTF measurement between the notch boundaries. More specifically removing spectral notches comprises inverting the HRTF and applying a peak finding algorithm to identify the notch minima and the notch boundaries. In this way the spatial perception features are removed while maintaining the shape of the HRTF.

The HRTF processed to remove the spectral notches is referred to as the HRTF' (HRTF primed). Processing a plurality of HRTF measurements further comprises, after removing the spectral notches: calculating an average HRTF' for each measurement angle, the average HRTF' comprising the average over the plurality of subjects at that measurement angle; subtracting the average HRTF' from each individual HRTF' to provide a timbre feature for the corresponding measurement angle. The average HRTF may be referred to herein as a template HRTF providing an average response across a plurality of subjects. Preferably it comprises averaging over at least 10 subjects, preferably at least 100 subjects. In other examples, rather than subtracting the calculated average HRTF', a synthesised average response is subtracted from each HRTF'. More generally, the step may comprise subtracting an average response (synthesised or calculated) from each subject's HRTF'.

Preferably the autoencoder model comprises a convolutional encoder and a convolutional decoder, trained using a mean squared error as the reconstruction loss. This has been shown to provide particularly accurate reconstruction results. Preferably the subject classifier comprises a fully connected classification model trained to minimise cross entropy loss and the measurement angle classifier comprises a fully connected classification model trained to maximise cross entropy loss.

Preferably the total loss for optimizing the model is given by the following equation:

$$\text{Loss} = L_{AE} + L_{TC} - L_{AD}$$

where, $L_{AE}$ denotes the reconstruction loss, i.e. the mean square error between the Decoder's output and the Encoder's input, $L_{TC}$ denotes the cross entropy between the timbre prediction and labels and $L_{AD}$ denotes the cross entropy between the azimuth prediction and labels. The multi-task training objective involves minimising $L_{AE}$ and $L_{TC}$ while maximizing $L_{AD}$. This ensures that no localization information is captured in the latent vector space.

In another aspect of the invention there is provided a computer-implemented method of synthesising a head-related transfer function, HRTF, the method comprising: providing an HRTF timbre synthesiser comprising the latent vector space and decoder of the autoencoder model trained according to a method of the first aspect of the invention; selecting a vector from the latent vector space and a measurement angle; inputting the selected vector and measurement angle into the decoder to output a timbre feature at the selected measurement angle; generating an HRTF using the output timbre feature. In this way an HRTF can be synthesised in which a synthesised timbre component can be applied, without affecting the localisation perception information within the HRTF. The latent vector space encodes a wide range of possible HRTF timbre characteristics, allowing the timbre of a synthesised HRTF to be tuned to a particular subject.

Preferably the method further comprises inputting a plurality of measurement angles with the selected vector from the latent vector space and feeding to the decoder to output a plurality of timbre features, each at a different measurement angle; reconstructing a full HRTF timbre component from the plurality timbre features, the full HRTF timbre component comprising the timbre features across the full measurement range; generating an HRTF using the full timbre component. In this way a complete HRTF can be constructed, since the latent vector space includes timbre across all measurement angles.

In some examples generating an HRTF comprises: obtaining an input HRTF; combining the timbre feature into the input HRTF. In some examples combining the timbre feature into the input HRTF comprises replacing the timbre component of the input HRTF with the synthesised timbre feature. The input HRTF may be a measured HRTF, an average HRTF comprising an average HRTF magnitude spectrum averaged across a plurality of subjects, or an at least partially synthesised HRTF. In some examples the input HRTF maybe a template HRTF, representing an average response, for example the template HRTF may preferably be the average HRTF', to which features can be added or tuned to personalise the HRTF to a subject. For example a full HRTF may be constructed by inputting the average HRTF' then adding the synthesised timbre component and localisation perception features, where the localisation perception features preferably comprise pinnae notches and ITD. This allows for prior art methods of HRTF synthesis focussing on localisation features to be applied to timbre features.

The method may comprise adding localisation features, for example pinnae notches, to an output timbre feature to construct an HRTF. In particular, the timbre feature (i.e. the timbre component of an HRTF generated according to the present invention) may be used as a starting point to which localisation features are then added and tuned.

In some examples selecting the vector from the latent vector space comprises receiving a user input and selecting the vector from latent space based on the user input. In particular, because the latent space defines timbre by a reduced number of parameters, a user input may be used to select the parameters (i.e. select a vector from the latent space, for example by selecting values of its elements).

In some examples selecting the vector from the latent vector space comprises: providing a reduced vector space, formed by performing dimensionality reduction on the latent vector space; receiving a user selection of a vector within the reduced vector space with a user input. In this way, the number of parameters defining timbre is reduced further to a manageable number of parameters that may be selected by a user. The method may comprise mapping a vector from the reduced vector space to a corresponding vector in the latent vector space and inserting the vector from the latent space into the decoder to output the timbre component. Performing dimensionality reduction on the latent vector space may comprise using T-SNE or PCA.

The user input may be provided by a controller or user interface (e.g. a GUI). The reduced dimensionality vector space may have 1 dimension and the user input comprises a slider on a graphical user interface for selecting a value. The reduced vector space may have 2 dimension and the user input comprises a draggable point on a 2D graph of a graphical user interface or two sliders on a graphical user interface for selecting a value of each dimension. The reduced vector space may have 3 dimension and the user input comprises a physical controller where pan, tilt and roll of the controller provide selection of a value of each dimension. The reduced vector space may have 6 dimensions and the user input comprises a controller where pan, tilt and roll of the controller and translation of the controller in the x, y and z dimensions provide selection of the value of each dimension.

In another examples there is provided a system for HRTF synthesis, the system comprise a user input device configured to receive a user input and a processor configured to select a vector from the latent space, learned according to a method according to the first aspect of the invention, based on the user input and input the selected vector into the decoder learned according to the first aspect of the invention, in order to generate an HRTF timbre for synthesising an HRTF.

In another aspect of the invention there is provided a computer-implemented method of storing a plurality of HRTF timbre profiles, the method comprising: receiving a plurality of HRTF timbre profiles, each profile comprising a plurality of timbre features of a subject recorded at different measurement angles, each timbre feature comprising an HRTF measurement of a subject at a particular measurement angle, where the HRTF measurement has been processed to remove location-dependent features of the HRTF; encoding the plurality of HRTF profiles in the latent vector space trained according to a method of the first aspect. This provides a particularly memory efficient means to store and deploy a large number of possible HRTF timbres, improving the ability to synthesise personalised HRTFs.

In another aspect of the invention there is provided a computer-implemented method of training a machine learning model to predict a subject's HRTF timbre based on physiological characteristics; providing a training data set comprising a plurality HRTF timbre feature from a subject and accompanying physiological data encoding one or more physiological parameters of the subject; encoding the HRTF timbre features into a vector in the latent vector space learned using the method of any of claims 1 to 10; training a machine learning model to predict the vector representing a subject's HRTF timbre feature based on input physiological data from the subject. In this way, rather than a user needing to provide an input to tune and personalise the generated timbre component and the synthesised HRTF, the timbre can be predicted directly from physiological features. The use of latent vector space retains the advantages explained above, particularly that it is measurement direction independent and can be applied to an HRTF without changing the localisation features, and the latent space provides a particularly efficiency compressed format for encoding the vast variation of possible timbre features.

The input physiological data comprises one or more of: data encoding measurements of a the subject's head size or shape; data encoding measurements of a the subject's shoulder size or shape; data encoding measurements of a the subject's torso size or shape; data encoding measurements of a the subject's ear size or shape; an image of the subject's ear.

In a further aspect of the invention there is provided a method of generating a personalised head-related transfer function, HRTF, the method comprising: inputting physiological data of a subject to a machine learning model trained according to claim 22 or 23 to output a latent space vector encoding timbre information; inputting the latent space vector into the decoder trained according to any of claims 1 to 10 to output a timbre feature; generating a personalised HRTF using the output timbre feature.

In a further aspect there is provided a computer program comprising instructions that, when executed by a computer cause the computer to perform a method defined above or any appended claim. In a further aspect there is provided a system comprising a processor configured to perform a method defined above or in any appended claim.

## BRIEF DESCRIPTION OF DRAWINGS

Embodiments of the invention are described below, by way of example only, with reference to the accompanying drawings, in which:

Fig. 1A illustrates an example of an HRTF from a particular subject's ear at a particular measurement direction;

Fig. 1B illustrates an example of a notch identification and removal routine applied to the HRTF of Figure 1A;

Fig. 1C illustrates the HRTF of Figure 1 after processing to remove spectral notches, referred to HRTF';

Fig. 1D illustrates the average HRTF', comprising an average of the HRTF's measured from a plurality of subjects at the same measurement angle as Figure 1A;

Fig. 1E illustrates the timbre component of the HRTF of Figure 1A, calculated by subtracting the average HRTF' of Figure 1D from the HRTF' of Figure 1C;

Fig. 2 illustrates an autoencoder model architecture and training procedure according to the present invention;

Fig. 3 illustrates a method of training a deep learning model for use in synthesis of a head-related transfer function according to the present invention;

Fig. 4 illustrates a method of synthesising a head-related transfer function according to the present invention;

Fig. 5 illustrates a method of storing a plurality of head-related transfer functions according to the present invention.

## DETAILED DESCRIPTION

Head-Related Transfer Functions (HRTFs) are frequency and time-dependent signal processing filters that represent the stereo anechoic acoustic transfer function between a positional sound source and a listener's ears. In the time domain, they are referred to as Head-Related Impulse Responses (HRIRs). An individual's HRTF is commonly measured at many angles around their head, referenced with respect to azimuth (rotation around the horizontal axis) and elevation. The response of left and right ears differ and are both encoded into the HRTF.

HRTFs provide the listener with spatial cues that help them to localize sounds in 3D space. These cues include time and level differences between ears (primarily associated with lateral localization) and peaks/notches within the frequency response of each ear (primarily associated with elevatory localization). By convolving an audio signal with an HRTF and presenting the result directly to a listener's ears (usually via headphones but also potentially via loud speakers with additional signal processing considerations), a source may be simulated as if coming from the direction in which the HRTF was measured. HRTFs are a crucial part of binaural acoustic applications for simulating immersive acoustic experiences in augmented reality (AR), virtual reality (VR), gaming and entertainment applications.

Since each individual has a unique HRTF, in order to provide accurate binaural audio in applications such as video games it is necessary to carefully select an HRTF to ensure it is as close as possible to user's true HRTF. To achieve this it is necessary to simulate a personalised HRTF to be applied to audio signals. Many methods have been explored for this, such as adjusting known features in an input or base HRTF based on user feedback or based on physiological features of the user, for example based on measurements of the head and ear or an image of the user's ear.

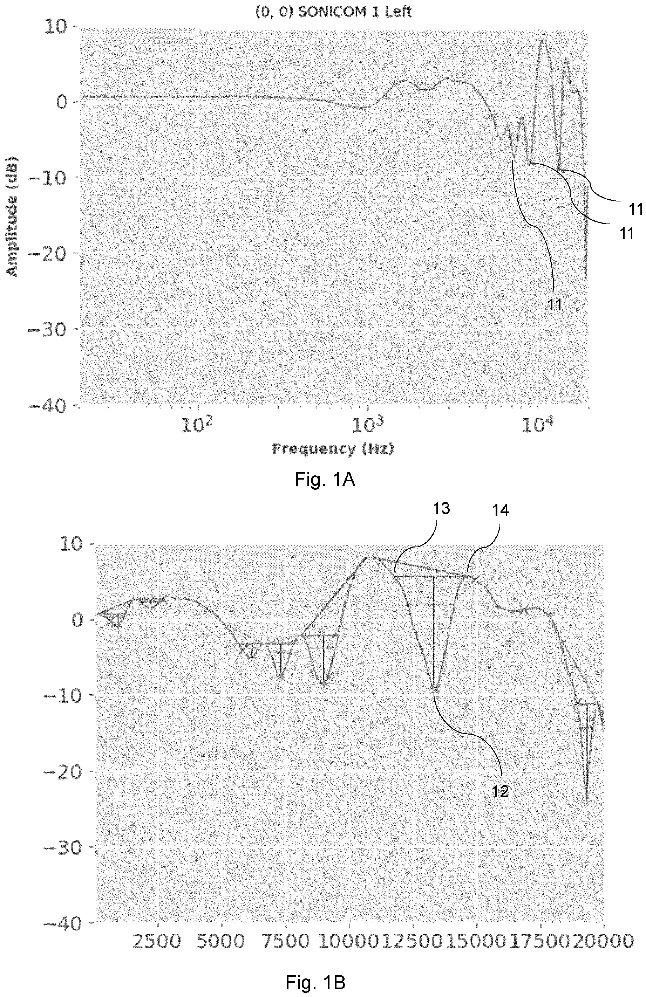

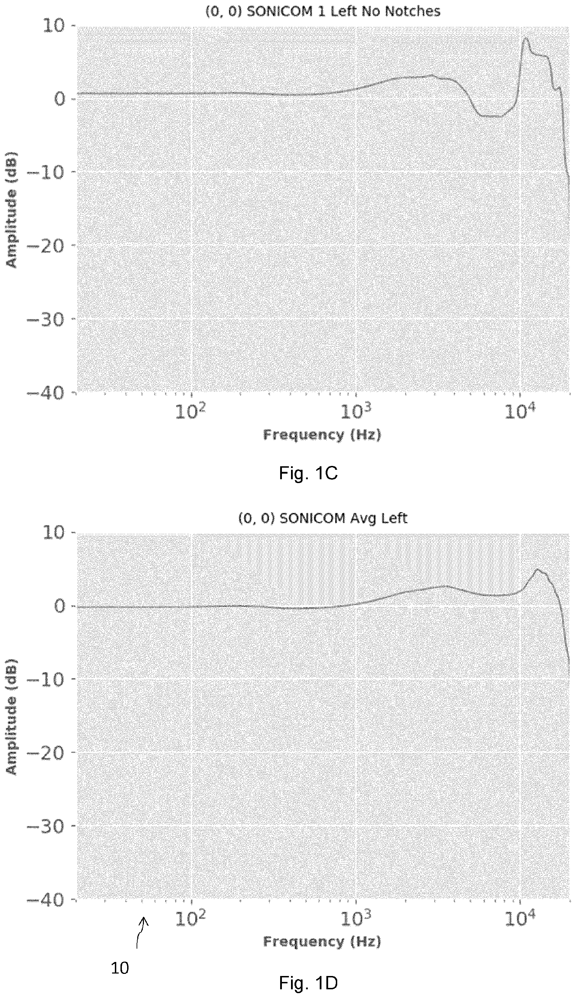

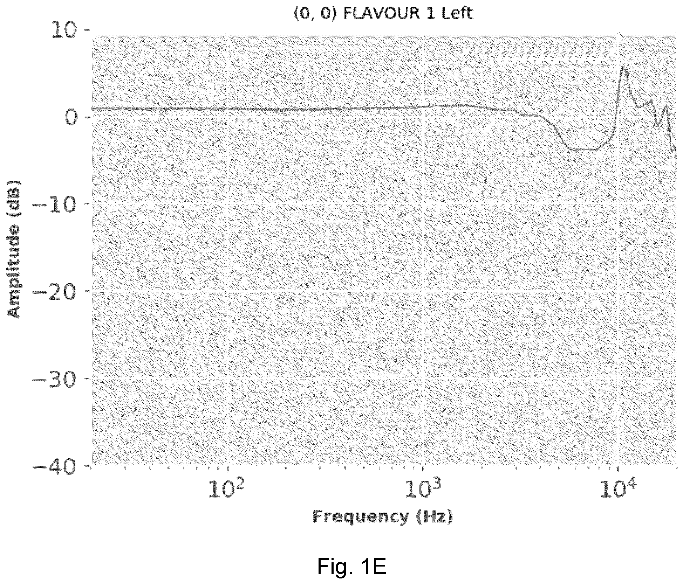

These methods have until now focussed on the prominent known features in the HRTF that are responsible for the majority of localisation perception. These include the interaural time delay (ITD), related to the size and shape of the user's head and the distance between the user's ears and the interaural level distance (ILD) related to the differing frequency-dependent sound sensitivity between a user's ears, the ITD and ILD primarily associated with lateral localisation. The features further include the spectral notches 11, or "pinnae notches" as shown in Figure 1, related to the user's pinna features of the ear, which are primarily responsible for elevator localisation.

There has been significant progress HRTF simulation techniques focussed on simulating and personalising these localisation related features of the HRTF for use in providing spatial audio. However, HRTFs have further features associated with perceptual attributes other than localisation. This remaining component of the HRTF may be defined as the timbre component, which is responsible for a change in sound coloration when an HRTF is applied to an audio signal. Although there is a degree of spatial dependency in the HRTF timbre component, it does not provide any spatial perception cuesi. The timbre component may be defined as a set of smooth (low order) filters that vary over the sphere (again, is a smooth fashion). These filters will provide small magnitude changes (approximately <10dB) compared to spectral notches where the magnitude changes could be > - 50dB.

Every HRTF is characterised by a unique timbral quality that provides a differing change in sound coloration. It is necessary to include this timbre component, and ideally match a simulated timbre component to a user's true HRTF timbre, in order to provide a full, realistic perception of binaural audio to provide an immersive aural experience. Furthermore is it important to be able to combine this timbre component into an existing HRTF without affecting the localisation information, which ideally should be tuneable separately. Since the timbre component of an HRTF is unique and varies significantly from user to user, there is also a need in HRTF synthesis to store possible timbre components in a storage efficient manner to allow them to be recalled and applied at runtime.

The present invention involves training a deep learning model to learn a latent vector space encoding timbre information, independently of localisation information so that a vector from the latent space can be decoded to provide the timbre component of an HRTF. By synthesising an HRTF including the timbre component a more realistic and immersive binaural audio output can be generated, compared to methods that purely focus on localisation features. Furthermore, the learning of a latent vector space allows for ease of tuning of the timbe component by varying the values of the vector encoding the timbre space. In particularly, by providing a user input control for adjusting the values of a vector from the latent space, a straightforward means for user-controlled timbre tuning can be provided. This is important as for the best results it can be useful to allow a user to tune the timbre component themselves, and learning a latent vector space allows timbre to be parameterised in a way that allows it to be adjusted by a user. Furthermore, the latent vector space effectively compresses all possible timbre components into low dimension vector space, providing efficient storage of a large number of possible timbre components for deployment at runtime.

**Extracting the timbral component of an HRTF**

In order to train the deep learning model to learn a latent vector space encoding timbre, it is first necessary to extract the timbre component of an HRTF in order to form the training data to train the model.

HRTF timbre, the timbre component of a HRTF, is defined as the inter-subject variations of HRTFs (more specifically diffuse field equalized HRTFs) that are not related to changes in localization perception. This can be thought of as the notchless magnitude deviation from an average response. To extract timbre it is firstly necessary to process an HRTF to remove the localisation-related features.

The process starts with the HRTF measurement, i.e. the complex frequency response, from each ear at each measurement angle. An HRTF measurement at azimuth 0° and elevation angle 0° of a subject is shown in Figure 1. The HRTF is then processed to remove the spectral notches 11 from the magnitude response of each measurement. This process includes identifying notch boundaries, removing the necessary samples, re-interpolating the response and smoothing the output.

The notch removal process may be carried out using any suitable prior art method, such as by inverting the signal and using a peak finding algorithm. Figure 1B illustrates an exemplary notch identification process, applied to the HRTF shown in Figure 1A but now shown on a linear rather than log scale. The method involves firstly identifying an approximate central frequency of a notch 12, as shown in figure 1B, inverting the signal and using a peak finding algorithm to identify the left 13 and right 14 bases (or "shoulders") of the notch. The signal between the bases 13, 14 can then be removed and reinterpolated to remove the notch.

In a more specific preferable example, approximate notch frequencies can be identified using a Linear Predictive Coding (LPC), for example based on a signal processing method described in Vikas C. Raykaret al., "Extracting the frequencies of the pinna spectral notches in measured head related impulse responses," The Journal of the Acoustical Society of America, vol. 118, no. 1, pp. 364-374, 07 2005. An appropriate method is also demonstrated in Simone Spagnol and Federico Avanzini, "Frequency estimation of the first pinna notch in head-related transfer functions with a linear anthropometric model," in Proceeedings of the 18th International Conference on Digital Audio Effects 2015.

The notch boundaries (the beginning and end of each notch) may then be identified by identifying local neighbouring minima (the actual notch frequencies), inverting the spectrum and using a peak prominence detection algorithm (e.g. scipy.peak prominences (https://docs.scipy.org/doc/scipy) which returns the left and right bases of each peak directly. The method can be fine-tuned by alternatively calculating various notch width frequencies (e.g. scipy.peak prominences to better define the start and end of the notches for a given dataset. Next, we can remove samples (i.e. set the sample value to NaN) from the frequency response data that have been identified as being part of a notch and reinterpolate the response over these samples with a pchip algorithm.

In some examples a simple smoothing routine may be used to remove any discrepancies from the notch removal process and better isolate the overall shape of the signal. This processed HRTF, with the spectral notches removed, is referred to herein as a subject's HRTF', corresponding to the HRTF with all significant localisation-related features removed. The HRTF' output after processing the HRTF of Figure 1A is shown in Figure C.

The method then involves calculating the average HRTF' at each angle (the average or "template" HRTF), referred to as the Average Response'. This is the average HRTF' calculated over a plurality of subjectss, in this case all ears in the Sonicon HRTF database. An HRTF' is shown in Figure 1D. Finally a subject's HRTF timbre for a particular measurement angle is calculated by subtracting the average HRTF at that measurement angle (as shown in Figure 1D) from the processed notchless HRTF (HRTF') for that measurement angle. Figure 1E illustrated an example of a subject's HRTF timbre (also referred to herein as the timbre component of an HRTF) at a particular measurement angle.

**Training data set**

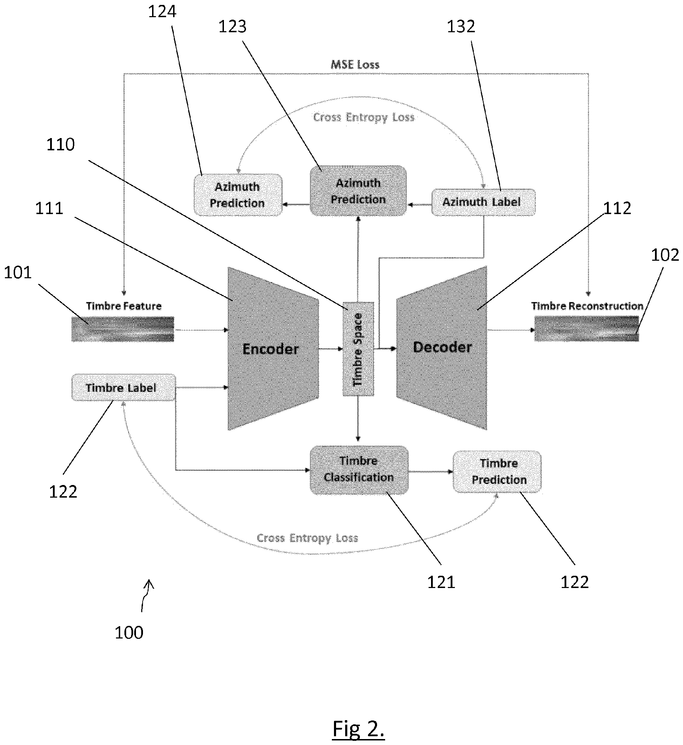

The present invention involves training a deep learning model, using the extracted timbre components of HRTF to learn a latent vector space encoding timbre information. This can then be used for downstream HRTF synthesis and personalisation. An example of a deep learning model for learning the timbre vector space is illustrated in Figure 2 and, as will be described in more detail below, it comprises an autoencoder that is trained to reconstruct input HRTF timbre components, whilst being conditioned on the measurement angle, so that the latent vector space (referred to herein interchangeably as the timbre vector space or timbre space) is trained to encode only timbre information, and not measurement angle information. This is what allows the timbre component to be applied in HRTF synthesis or personalisation, without affecting the spatial cues of an input or base HRTF to which it is applied.

The training data set comprises a plurality of HRTF timbre components, i.e. HRTF measurements, each HRTF associated with a particular subject's ear, over a plurality of measurement angles over the sphere, that have been processed according to the procedure described above to extract the timbre component.

The model is trained using "timbre features" - a vector encoding an HRTF timbre component at one or more measurement angles. In some examples of the invention the timbre feature may comprise the timbre component of an HRTF at a single measurement angle, i.e. a one-dimensional vector giving the magnitude value at each frequency interval. In other examples the timbre feature may comprise the timbre component of a subject's HRTF at a plurality of measurement angles. For example, it may be a matrix encoding the magnitude values at each frequency interval for a range of measurement angles.

In the present example the timbre features on which the model is trained comprise a subject's HRTF timbre component at a plurality of elevation angles for a single azimuth. It is therefore a 2D matrix with a shape comprising [Number of frequency bins x number of elevations]. In the present example the HRTF timbe components comprise 257 frequency bins from 0 to 24kHz and there are 17 elevation measurement angles in total from -60$_\circ$ to 60$_\circ$. Therefore each timbe feature comprises a $[257 \times 17]$ matrix that represents a subject's Timbre' data at all elevations for a single azimuth. The model 100 is trained on a batch of timbre features, as explained in more detail below.

Each timbre feature is supplemented by subject label 122 (also referred to as a timbre label 122, as shown in figure 1) and a measurement angle label 132. In the present example in which the timbre features 101 comprise the timbre components over all elevations for a single azimuth, the measurement angle label 132 comprises an azimuth label, indicating the azimuth measurement angle. However, in examples where the timbre features comprise the timbre component at a single measurement angle, the measurement angle label may indicate a specific single measurement angle (i.e. the specific azimuth and elevation angles).

In the present example the subject (timbre) label 122 and the measurement angle (azimuth) label 132 are each in a one-hot encoded format, i.e. a single one dimensional vector with a number of elements corresponding to the total number of classes. In this example there are 200 subjects with each ear considered individually giving 400 separate HRTFs, so the subject label is a 400-element vector with one element set to 1 to indicate the subject class and all other elements set to 0. Similarly, the azimuth label is a 48-element vector. Azimuths are encoded in ascending order such that index 0 corresponds to -172.5$_\circ$, index 1 corresponds to -165$_\circ$ and so on. The right ear HRTFs are flipped so that they are aligned with the left ear HRTFs.

**Model architecture and training**

The model architecture is shown in Figure 2. The model 100 comprises a conditional autoencoder model 100. The autoencoder model 100 comprises an encoder 111 for encoding an input timbre feature 101 into a latent vector space 110 (within the "timbre space") and a decoder 112 for decoding from the latent vector space 110 to reconstruct the timbre feature 102. The model further comprises a subject classifier 121 (or equivalently "timbre classifier" / timbre classification module) arranged to take a vector from the latent vector space 110 as input and output a predicted subject class 122. The model further comprises a measurement angle classifier 123 (in this example an azimuth prediction/discrimination module) arranged to take a vector from the latent vector space 123 as input and output a predicted measurement angle class (in this example the azimuth class).

The encoder-decoder 111, 112 is trained to reconstruct the input timbre feature 101 using an appropriate reconstruction loss, in this example mean squared error (MSE). The subject classifier 112 is trained so as to minimise the classification error in predicting a subject class based on the learned timbre space (i.e. the encoding of the input feature). In this way the encoder is trained to learn a latent vector space 110 that is predictive of the subject from which the timbre component was measured so that it groups measurements from the same subject together. In this example a cross entropy (CE) loss is used. The measurement angle classifier 123 (measurement angle discrimination module) is trained so as to maximise the classification error such that the autoencoder learns a latent space 110 that discards measurement angle information. Again, in this example a cross entropy (CE) loss is used.

The total loss for optimizing the model is shown in Equation 1, below. $L_{AE}$ denotes the reconstruction loss, i.e. the MSE between the Decoder's output and the Encoder's input, $L_{TC}$ denotes the CE between the timbre prediction and labels and LAD denotes the CE between the azimuth prediction and labels. The multitask training objective involves minimising $L_{AE}$ and $L_{TC}$ while maximizing $L_{AD}$ to make sure that no localization information is captured in the encodings.

$$\text{Loss} = L_{AE} + L_{TC} - L_{AD} \quad (1)$$

In this example the encoder comprises a convolutional encoder and the decoder comprises a convolutional decoder, each comprising multiple convolutional blocks with each followed by the LeakyRELU activation function and a batch normalization layer. It will be appreciated that other encoder/decoder architectures could be used.

The input to the encoder 111 is a batch of timbre features 101 together with their subject label 122. The encoder is trained to encode the input into the learned latent vector space 110, such that the encoder's output is a batch of lower-dimensional latent vectors corresponding to the inputs. These latent vectors 110 are fed to the decoder 112 together with the measurement angle (in this case azimuth) labels 132. The decoder then generates reconstructions of the input timbre features which correspond to the specified measurement angle. While training, the mean square error between the input timbre features 101 and the reconstructed timbre features 102 output by the decoder 112 is calculated.

The latent vectors 110 encoding the input timbre features are also fed into the subject classifier module 121 together with the subject labels 122 and, while training, the cross entropy between the subject label predictions 122 and subject label ground truth is calculated. Similarly, the latent vectors 110 encoding the input timbre features 101 are fed into the measurement angle classifier/discrimination module 123 with the measurement angle labels and, while training, the cross entropy between the measurement angle (in this example, azimuth) predictions and ground truth is calculated.

As shown in Equation 1, the model is trained in a multitask learning manner to perform timbre feature reconstruction, subject classification and measurement angle discrimination. Given a batch of latent vectors, the measurement angle classifier 123 must not be capable of classifying the measurement angle location (in this case the azimuth only) that these encodings were generated from because the latent vector space, only captures timbre-related information.

The result of the training method is a learned latent vector space that encodes timbral information (i.e. non localisation related magnitude change information) of an HRTF, and discards localisation information. The trained latent vector space and decoder can then be used to output a timbre feature (i.e. the timbe component of an HRTF at a particular measurement angle) which can be added to a template or base HRTF without affecting the localisation information. This has the effect of altering the timbre of an audio signal without changing the spatial cues. It can therefore be used to synthesise more complete synthetic HRTFs that provide more realistic and immersive audio.

An exemplary method is illustrated in figure 2 and comprises a first step S102 of providing a training dataset comprising a plurality of timbre features, each timbre feature comprising an HRTF measurement of a subject at a particular measurement angle, where the HRTF measurement has been processed to remove localisation perception features of the HRTF. The method comprises a second step S104 of training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, the latent vector space thereby usable to synthesise a timbre component of an HRTF.

Applications of the trained model are described in more detail below.

## Use of the trained model in HRTF synthesis and personalisation

There are a number of known methods of HRTF synthesis and personalisation. These often start from a template or base HRTF (for example an average HRTF - an averaged magnitude spectrum over a plurality of HRTFs) and make adjustments to the features known to be associated with localisation perception, in particular the ITD, ILD and pinnae notches. For example methods may involve replacing or adding to sections of the template HRTF with corresponding sections generated through HRTF synthesis. Methods may involve predicting the location and size of certain HRTF features, such as the pinnae notches, and applying these to the base/template HRTF. In some examples, method may adjust parameters associated with the localisation perception features in response to user feedback.

As described above the present method allows corresponding HRTF synthesis and personalisation methods to be applied to the timbre component of an HRTF - the features not associated with localisation, but instead with a perception of the audio, that must be included to provide the user with the closest replication of how they experience audio. Although there is some spatial dependency to the HRTF timbre component, it is not responsible for any perceived spatial cues, such as those provided by the other prominent features of the HRTF, such as the pinnae notches, ILD and ITD. This presents technical challenges in synthesising and personalising HRTF timbre because unlike with the localisation features, where there are clear parameters that can be adjusted such as the size and position of the pinnae notches, the timbre component is less well understood and does not have a manageable number of readily identifiable parameters that can be adjusted to tune the timbre. The inventors have identified that learning a latent vector space to encode the timbral component allows for the timbre to be expressed in terms of a manageable number of parameters facilitating HRTF timbre synthesis and personalisation.

In the most straightforward application of the method, HRTF synthesis involves taking the trained latent vector space 110 and decoder 112, selecting a vector and decoding this with the encoder to generate a timbre feature (i.e. a synthesised timbre component of an HRTF, equivalent to that achieved by the processing method applied to a measure HRTF as described above). This timbre component can then be used to generate a full or partial HRTF by adding average template features or the localisation features according to a method of the prior art (such as those described in Corentin Guezenoc and Renaud Seguier, "HRTF Individualization: A Survey," arXiv e-prints, p. arXiv:2003.06183, Mar. 2020). In some examples this could involve taking a template HRTF (e.g.. an HRTF averaged over multiple subjects) and adding the timbre component to the template HRTF or replacing the corresponding portion of the HRTF with the timbre component. In other examples, localisation features may be added to the timbe component generated according to the present method. Since the timbre space does not encode measurement angle information, the generated timbre feature can be applied to an HRTF without affecting the localisation perception features.

To synthesis the full HRTF timbre of a subject across all measurement angles each measurement angle can be input into the decoder with a particular vector from the latent vector space 110 to reconstruct the complete HRTF timbre of a subject.

The latent vector or "timbre space" 110 defines a huge range of possible timbre characteristics, beyond those of the real HRTF used to train the model, so can be used as a flexible HRTF timbre synthesiser, and the timbre need not be restricted to the timbre components of the training data. In some examples the timbre component of a synthesised HRTF can be tuned by a user. For example, when generating an HRTF for a user, for example for use in AR, VR or video game applications, a user interface may be provided allowing a user to select a vector from the latent vector space. For example, a user interface may be provided allowing a user to vary the selected vector from the latent vector space while listening to the effect on an audio signal output to the user. The user input may map to a selection of a vector in the latent vector space. The user may select a vector that provides the best quality audio output, for example providing the most realistic, immersive or pleasing effect of the output audio.

In some examples, the mapping between the user input and the latent vector space may be facilitated and made more intuitive by performing dimensionality reduction on the latent vector space. Although the latent vector space itself provides a reduced dimension encoding of timbre information, there are still a large number of dimensions (64 in the detailed example provided below) which is still a large number of parameters to adjust for a user to find the desired effect. Methods of dimensionality reduction such as PCA or T-SNE may be used to reduce the number of dimensions down to a manageable number of user-adjustable parameters. For example, the method may reduce the vector space to 1 dimension, controllable by a slider on a graphical user interface. Alternatively, the reduced vector space may have 2 dimensions, and the user input may be implemented as a draggable point on a 2D graph of a graphical user interface or two sliders on a graphical user interface for selecting a value of each dimension. In another example the reduced vector space has 3 dimensions and the user input comprises a physical controller where pan, tilt and roll of the controller provide selection of a value of each dimension. Alternatively dimensionality reduction may be performed on the latent vector space to provide a reduced vector space with 6 dimensions and the user input may be provided as a controller where pan, tilt and roll of the controller and translation of the controller in the x, y and z dimensions provide selection of the value of each of the 6 dimensions.

As above, once the user has selected a timbre-component that provides the best results, this may be used to synthesise a full HRTF for use at runtime. For example, the timbre component may be added to an already synthesised HRTF comprising localisation features, since the application of the timbre component learnt in this way does not affect the localisation features.

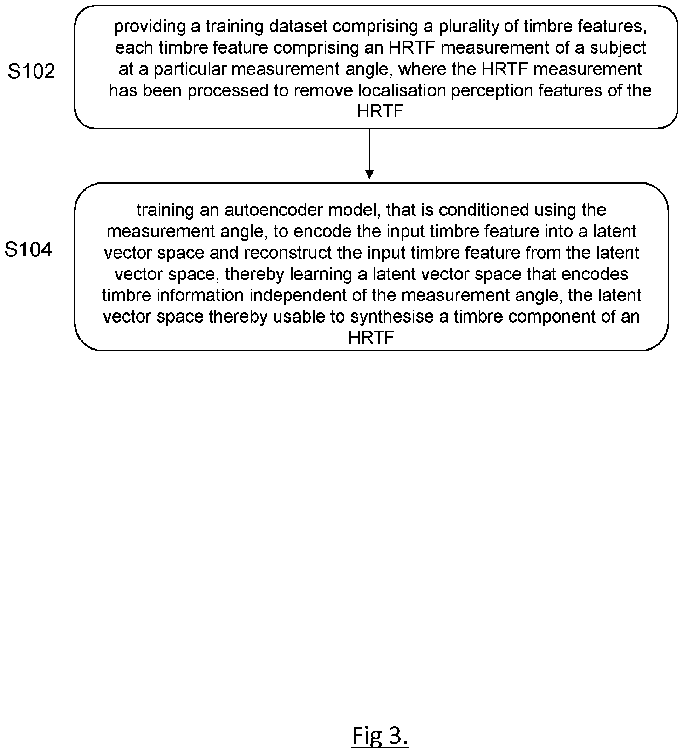

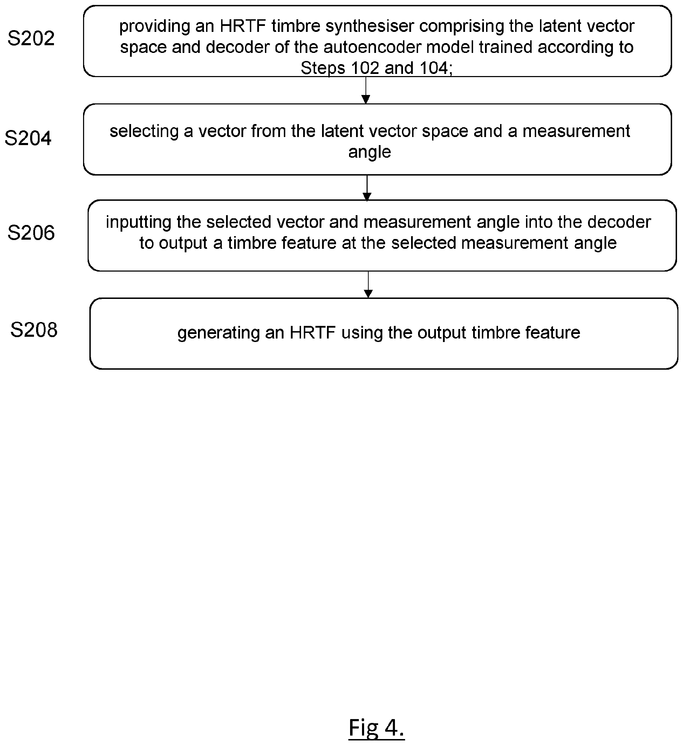

A method of HRTF synthesis is illustrated in Figure 4 and comprises a first step 202 of providing an HRTF timbre synthesiser comprising the latent vector space and decoder of the autoencoder model trained according to Steps 102 and 104 of Figure 3; a second step 204 comprising selecting a vector from the latent vector space and a measurement angle; a third step 206 of inputting the selected vector and measurement angle into the decoder to output a timbre feature at the selected measurement angle and a fourth step 208 of generating an HRTF using the output timbre feature.

**Neural compression using latent vector space**

The learned timbre space can be utilised as a compressed representation of a predefined selection of timbre profiles. Storing a database of HRTFs is extremely memory intensive. The timbre component of the HRTF comprises the same number of values and therefore also presents a technical challenge in how to store a database of HRTF timbre components for selection and use by a user. The latent vector space of the present invention allows for a database of HRTF timbre components to be stored as the latent vector space, only requiring the learned vector space and decoder.

As an example, a database of 100 profiles, 1000 measurements per profile and 256 sample stereo filters with floating point precision would require approximately 204.8 MB of disk space. The components required for real-time use of the trained model of the present invention are the Decoder module (2.60 MB) and the latent space encodings (2.46 MB). Therefore, in this example, the latent vector space offers a x40 compression ratio.

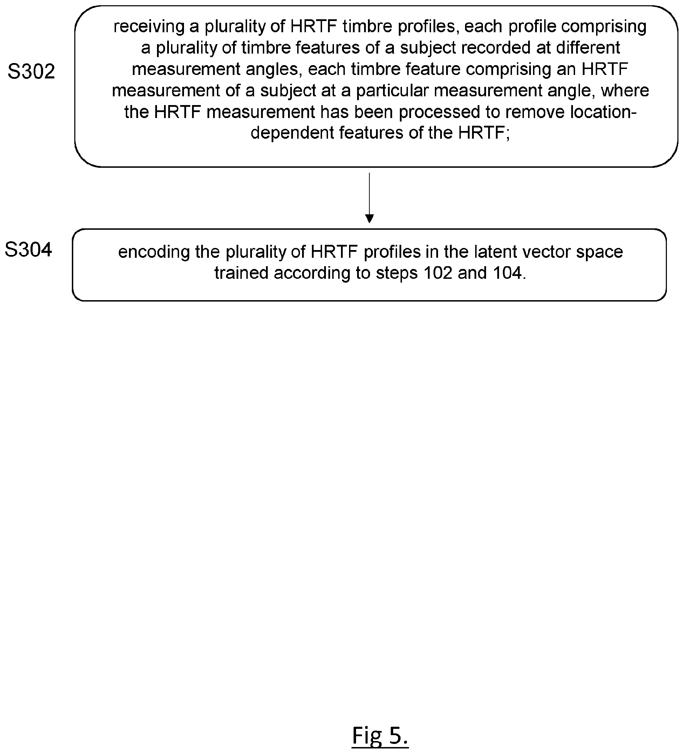

A method of compression of a plurality of HRTFs is illustrated in Figure 5. The method comprises a first step 302 comprising receiving a plurality of HRTF timbre profiles, each profile comprising a plurality of timbre features of a subject recorded at different measurement angles, each timbre feature comprising an HRTF measurement of a subject at a particular measurement angle, where the HRTF measurement has been processed to remove location-dependent features of the HRTF. The method comprises a second step 304 comprising encoding the plurality of HRTF profiles in the latent vector space trained according to steps 102 and 104 of Figure 3.

## Prediction of timbre features based on physiological parameters

The variation in HRTF timbre between subjects is caused by variations in physiology, particularly the shape of the head, pinnae and early reflections from the shoulder and torso. By encoding one or more aspects of these physical variations in data it is possible to train a machine learning model to predict a subject's timbre based on this input physiological data. This is beneficial as, rather than a user needing to tune their HRTF timbre using the above described methods to provide am optimum complete HRTF, the timbre can be directly predicted from input physiological data.

An example method of predicting HRTF timbre according to the present invention involves a first step of providing a training data set comprising a plurality of training instances, each comprising an HRTF timbre feature from a subject and accompanying physiological data encoding one or more physiological parameters of the subject. The second step comprises encoding the HRTF timbre features into a vector in the latent vector space learned using the method described above and finally training a machine learning model to predict the vector representing a subject's HRTF timbre feature based on input physiological data from the subject. The vector may then be used to generate the subjects HRTF timbre by inserting into the encoder with a measurement angle to generate the timbre feature for the input measurement angle. Predicting the timbre latent space vector rather than the timbre component may have advantages, in that it in then allows for synthesis of the timbre features along any and all measurement angles. It also provides an efficient measure for storing possible HRTF timbre components, such that at runtime, the user input the physiological data to determine the correct vector to select from the latent space and this is then used to generate the HRTF timbre and therefore personalise the HRTF.

The physiological training data may take a number of different forms, as long as it encodes physiological parameters responsible for the subject to subject variation in the HRTF timbre. Examples include data encoding measurements relating to one or more of a subject's head, shoulders and torso size and shape, data encoding measurements of the subject's ear size and shape, for example features of the pinnae and/or data encoding an image of the subject's ear. The physiological data may be encoded into an input vector and used to train a machine learning model, for example a classifier model, such as a fully connected or convolution neural network trained to output an output vector usable to predict the latent space vector encoding the timbre feature. In this way, the timbre component of a user can be generated based on physiological data and used to synthesise a personalised HRTF. The use of latent vector space retains the advantages explained above, particularly that it is measurement direction independent and can be applied to an HRTF without changing the localisation features, and the latent space provides a particularly efficiency compressed format for encoding the vast variation of possible timbre features.

## Example

The following provides a specific example of a suitable deep learning model and one possible example of the selection of training parameters that could be used to implement the present invention.

The example uses the newly released Sonicom database (Engel, Isaac et al. "The sonicom hrtf dataset," J.Audio Eng. Soc, vol. 71, no. 5, pp. 241-253, 2023). It consists of 200 subjects and 828 HRTF measurements per subject. Azimuths are sampled every 5°(-175° to 180°). Elevations are sampled every 10° (-30° to 30°), and every 15° below and above that (-45° to 90°).

This example uses 48 kHz free field compensated HRTFs, each of which is processed as follows: (1) remove unwanted floor reflections by applying a time-domain Hann window in the form of a 75 sample unity pad followed by a 50 sample half-hann closing window; (2) diffuse field equalize; (3) loudness normalize; (4) reinterpolate the measurement grid to match azimuths (-172.5° to 180°) and elevations (-60° to 60°).

To extract the timbe component (i.e. the timbre feature) each HRTF is first processed to remove the spectral notches from the magnitude responses of each measurement (per ear, per angle). This process includes identifying notch boundaries, removing the necessary samples, re-interpolating the response and smoothing the output. We shall refer to this as their HRTF'. Measurements of the right ear are flipped such that they represent left ear measurements to provide a database of 400 individual ears. The average magnitude spectrum at each angle (the Average Response') is then calculated. For each subject, the difference between their HRTF' and the Average Response' is calculated to give each subject's Timbre'. A single timbre feature for this exemplary model is constructed as a 2D matrix that represents a subject's Timbre' data at all elevations for a single azimuth. Each timbre feature has the shape $[257 \times 17]$ corresponding to [Number of frequency bins x number of elevations]. Frequency ranges from 0 up to 24 kHz while elevation ranges from -60° to 60°.

Timbre features extracted from the HRTF measured at each ear defines a unique timbre class, thus the database consists of $200 \times 2$ timbre classes in total. The dataset is made up by one timbre feature per azimuth location, that is [48 azimuths $\times$ 400 timbre classes] = 19200 timbre features. Those are split into two sets for training and validation. Timbre features are randomly selected at 10 azimuth angles for random 146 left HRTFs and another random 10 azimuth angles for random 146 right HRTFs. The resulting $[2 \times 10 \times 146]$ = 2920 features are used in the validation phase and the rest are used for training, forming an approximately 90%-10% split.

A model as illustrated in Figure 2 and described above is used. In this specific example, the Encoder module consists of multiple convolutional blocks each one followed by the LeakyRELU activation function and a batch normalization layer. The Decoder performs the inverse operation using transpose convolutional blocks. The Xavier uniform method (Xavier Glorot, "Understanding the difficulty of training deep feedforward neural networks," in International Conference on Artificial Intelligence and Statistics, 2010) is used for initializing the weights of both the Encoder and Decoder modules. The subject classification (equivalently "timbre classification") comprises four fully connected layers, an input layer with size 64 to match the latent size, two middle layers with 128 output neurons and an output layer with 400 output neurons, to match the total number of timbre classes in our dataset. The azimuth discrimination module 123 consists of four fully connected layers, an input layer with size 64 to match the latent size, two middle layers with 48 output neurons and an output layer with 48 output neurons, to match the total number of azimuths in our dataset.

As shown in Equation 1, the model is trained in a multitask learning manner to perform timbre reconstruction, timbre classification and azimuth discrimination. The model is trained for 2000 epochs and the evaluation is performed on the state when the best validation reconstruction loss was achieved. The batch size is set to 12 and the learning rate to 0.00005.

## Claims

1. A computer-implemented method of training a deep learning model for use in synthesis of a head-related transfer function, HRTF, the method comprising:

   providing a training dataset comprising a plurality of timbre features, each timbre feature comprising an HRTF measurement of a subject at a particular measurement angle, where the HRTF measurement has been processed to remove localisation perception features of the HRTF;
   training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, the latent vector space thereby usable to synthesise a timbre component of an HRTF.

2. The computer-implemented method of claim 1, wherein:

   the timbre features are each labelled with a subject label indicating the subject from which the HRTF was measured and a measurement angle label indicating a measurement angle of the HRTF; wherein the autoencoder model comprises:

      - an encoder for encoding an input timbre feature into a latent vector space and a decoder for decoding from the latent vector space to reconstruct the timbre feature;
      - a subject classifier arranged to take a vector from the latent vector space as input and predict the subject label;
      - a measurement angle classifier arranged to take a vector from the latent vector space as input and predict the measurement angle label;

   the method further comprising:
   training the machine learning model using the training dataset such that the autoencoder is trained to reconstruct the timbre feature through the latent vector space, while minimising a classification error of the timbre classifier and maximising a classification error of the measurement angle classifier, thereby learning a latent vector space that encodes timbre information independently of the measurement angle.

3. The computer implemented method of claim 2 wherein the decoder takes the measurement angle label as input so as to reconstruct the input timbre feature associated with a particular input measurement angle.

4. The computer implemented method of claim 2 or claim 3 wherein each timbre feature comprises a 2D matrix comprising the processed HRTF data at a specific azimuth angle and all elevation angles; wherein the measurement angle label comprises the azimuth angle and the measurement angle classifier is configured to predict the measurement angle label using a vector from the latent vector space as input, such that during training the model learns to encode timbre information in the latent vector space and discard azimuth information.

5. The computer implemented method of any preceding claim wherein providing the training dataset comprises:

providing a plurality of HRTFs, each measured from a particular subject at a particular measurement angle;
processing the plurality of HRTFs to remove location-dependent features of the HRTFs, where the processing comprises removing spectral notches from the measured HRTFs.

6. The computer implemented method of claim 5 wherein an HRTF measurement with the spectral notches removed is referred to as the HRTF' and processing a plurality of HRTF measurements further comprises, after removing the spectral notches:

calculating an average HRTF' for each measurement angle, the average HRTF' comprising the average over the plurality of subjects at that measurement angle;
subtracting the average HRTF' from each individual HRTF' to provide a timbre feature for the corresponding measurement angle.

7. A computer-implemented method of synthesising a head-related transfer function, HRTF, the method comprising:

providing an HRTF timbre synthesiser comprising the latent vector space and decoder of the autoencoder model trained according to claims 1 to 6;
selecting a vector from the latent vector space and a measurement angle;
inputting the selected vector and measurement angle into the decoder to output a timbre feature at the selected measurement angle;
generating an HRTF using the output timbre feature.

8. The method of claim 7, comprising:

inputting a plurality of measurement angles with the selected vector from the latent vector space and feeding to the decoder to output a plurality of timbre features, each at a different measurement angle;
reconstructing a full HRTF timbre component from the plurality timbre features, the full HRTF timbre component comprising the timbre features across the full measurement range;
generating an HRTF using the full timbre component.

9. The computer-implemented method of claim 7 or 8 wherein generating an HRTF comprises:

obtaining an input HRTF;
combining the timbre feature into the input HRTF, wherein combining the timbre feature into the input HRTF comprises adding the timbre feature to the input HRTF or replacing the timbre component of the input HRTF with the synthesised timbre feature.

10. The computer-implemented method of any of claims 7 to 9 wherein selecting the vector from the latent vector space comprises:

providing a reduced vector space, formed by performing dimensionality reduction on the latent vector space;
receiving a user selection of a vector within the reduced vector space with a user input, wherein performing dimensionality reduction on the latent vector space preferably comprises using T-SNE or PCA.

11. The computer implemented method of claim 10 wherein:

the reduced vector space has 1 dimension and the user input comprises a slider on a graphical user interface for selecting a value;
the reduced vector space has 2 dimension and the user input comprises a draggable point on a 2D graph of a graphical user interface or two sliders on a graphical user interface for selecting a value of each dimension;
the reduced vector space has 3 dimension and the user input comprises a physical controller where pan, tilt and roll of the controller provide selection of a value of each dimension;

the reduced vector space has 6 dimensions and the user input comprises a controller where pan, tilt and roll of the controller and translation of the controller in the x, y and z dimensions provide selection of the value of each dimension.

12. A computer-implemented method of storing a plurality of HRTF timbre profiles, the method comprising:

receiving a plurality of HRTF timbre profiles, each profile comprising a plurality of timbre features of a subject recorded at different measurement angles, each timbre feature comprising an HRTF measurement of a subject at a particular measurement angle, where the HRTF measurement has been processed to remove location-dependent features of the HRTF;
encoding the plurality of HRTF profiles in the latent vector space trained according to the method of any of claims 1 to 6.

13. A computer-implemented method of training a machine learning model to predict a subject's HRTF timbre based on physiological characteristics;

providing a training data set comprising a plurality HRTF timbre feature from a subject and accompanying physiological data encoding one or more physiological parameters of the subject;
encoding the HRTF timbre features into a vector in the latent vector space learned using the method of any of claims 1 to 6;
training a machine learning model to predict the vector representing a subject's HRTF timbre feature based on input physiological data from the subject; wherein the input physiological data comprises one or more of:
a measurement of the subject's head size;
a measurement of ear shape;
an image of the subject's ear.

14. A computer implemented method of generating a personalised head-related transfer function, HRTF, the method comprising:

inputting physiological data of a subject to a machine learning model trained according to claim 13 to output a latent space vector encoding timbre information;
inputting the latent space vector into the decoder trained according to any of claims 1 to 10 to output a timbre feature;
generating a personalised HRTF using the output timbre feature.

15. A system comprising a processor configured to perform the method of any preceding claim.

(0, 0) SONICOM 1 Left

Fig. 1A

Fig. 1B

**(0, 0) SONICOM 1 Left No Notches**

Fig. 1C

**(0, 0) SONICOM Avg Left**

10

Fig. 1D

Fig. 1E

Fig 2.

| S102 | providing a training dataset comprising a plurality of timbre features, each timbre feature comprising an HRTF measurement of a subject at a particular measurement angle, where the HRTF measurement has been processed to remove localisation perception features of the HRTF |

| S104 | training an autoencoder model, that is conditioned using the measurement angle, to encode the input timbre feature into a latent vector space and reconstruct the input timbre feature from the latent vector space, thereby learning a latent vector space that encodes timbre information independent of the measurement angle, the latent vector space thereby usable to synthesise a timbre component of an HRTF |

Fig 3.

S202 | providing an HRTF timbre synthesiser comprising the latent vector space and decoder of the autoencoder model trained according to Steps 102 and 104;

S204 | selecting a vector from the latent vector space and a measurement angle

S206 | inputting the selected vector and measurement angle into the decoder to output a timbre feature at the selected measurement angle

S208 | generating an HRTF using the output timbre feature

Fig 4.

S302 — receiving a plurality of HRTF timbre profiles, each profile comprising a plurality of timbre features of a subject recorded at different measurement angles, each timbre feature comprising an HRTF measurement of a subject at a particular measurement angle, where the HRTF measurement has been processed to remove location-dependent features of the HRTF;

S304 — encoding the plurality of HRTF profiles in the latent vector space trained according to steps 102 and 104.

Fig 5.

Europäisches
Patentamt

European
Patent Office

Office européen
des brevets

# EUROPEAN SEARCH REPORT

**Application Number**

EP 24 20 2685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICCINI RICCARDO ET AL: "A hybrid approach to structural modeling of individualized HRTFs", 2021 IEEE CONFERENCE ON VIRTUAL REALITY AND 3D USER INTERFACES ABSTRACTS AND WORKSHOPS (VRW), IEEE, 27 March 2021 (2021-03-27), pages 80-85, XP033911271, DOI: 10.1109/VRW52623.2021.00022 [retrieved on 2021-04-28] | 1,7-10, 12-15 | INV. H04S1/00 |
| A | * Sections 3, 5; figures 1, 2 * | 2-4,6,11 | |
| X | CHEN TZU-YU ET AL: "Autoencoding HRTFS for DNN Based HRTF Personalization Using Anthropometric Features", ICASSP 2019 - 2019 IEEE INTERNATIONAL CONFERENCE ON ACOUSTICS, SPEECH AND SIGNAL PROCESSING (ICASSP), IEEE, 12 May 2019 (2019-05-12), pages 271-275, XP033566364, DOI: 10.1109/ICASSP.2019.8683814 [retrieved on 2019-04-04] | 1,5,7,8, 12-15 | |
| A | * Section 2; figures 1, 2; table 1 * | 2-4,6, 10,11 | **TECHNICAL FIELDS SEARCHED (IPC)** H04S G06N |
| X | YUKI ITO ET AL: "Head-Related Transfer Function Interpolation from Spatially Sparse Measurements Using Autoencoder with Source Position Conditioning", ARXIV.ORG, CORNELL UNIVERSITY LIBRARY, 201 OLIN LIBRARY CORNELL UNIVERSITY ITHACA, NY 14853, 22 July 2022 (2022-07-22), XP091277924, * Section 4; figure 1 * | 1,7,8,15 | |

-/--

The present search report has been drawn up for all claims

| Place of search | Date of completion of the search | Examiner |
|---|---|---|
| Munich | 30 January 2025 | Joder, Cyril |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 24 20 2685

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/336858 A1 (BRIMIJOIN II WILLIAM OWEN [US] ET AL) 22 October 2020 (2020-10-22) * paragraph [0024] - paragraph [0031]; figure 2 * | 5,6 | |

- - - - -

TECHNICAL FIELDS
SEARCHED      (IPC)

The present search report has been drawn up for all claims

| Place of search | Date of completion of the search | Examiner |
|---|---|---|
| Munich | 30 January 2025 | Joder, Cyril |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 2685

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2025

| Patent document cited in search report | Publication date | Patent family member(s) | | Publication date |
|---|---|---|---|---|
| US 2020336858 A1 | 22-10-2020 | CN | 113767648 A | 07-12-2021 |
| | | EP | 3957086 A1 | 23-02-2022 |
| | | JP | 2022529203 A | 20-06-2022 |
| | | KR | 20210153653 A | 17-12-2021 |
| | | US | 2020336858 A1 | 22-10-2020 |
| | | US | 2021112364 A1 | 15-04-2021 |
| | | WO | 2020214496 A1 | 22-10-2020 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VIKAS C. RAYKARET**. Extracting the frequencies of the pinna spectral notches in measured head related impulse responses. *The Journal of the Acoustical Society of America*, July 2005, vol. 118 (1), 364-374
- **SIMONE SPAGNOL** ; **FEDERICO AVANZINI**. Frequency estimation of the first pinna notch in head-related transfer functions with a linear anthropometric model. *Proceeedings of the 18th International Conference on Digital Audio Effects*, 2015
- **CORENTIN GUEZENOC** ; **RENAUD SEGUIER**. HRTF Individualization: A Survey. *arXiv:2003.06183*, March 2020
- **ENGEL, ISAAC et al.** The sonicom hrtf dataset. *J.Audio Eng. Soc*, 2023, vol. 71 (5), 241-253
- **XAVIER GLOROT**. Understanding the difficulty of training deep feedforward neural networks. *International Conference on Artificial Intelligence and Statistics*, 2010